(19) Europäisches Patentamt
European Patent Office
Office européen des brevets

(11) Veröffentlichungsnummer: **0 301 353 A2**

# (12) EUROPÄISCHE PATENTANMELDUNG

(21) Anmeldenummer: **88111520.8**

(51) Int. Cl.⁴: **C09J 3/14 , C08F 2/50**

(22) Anmeldetag: **18.07.88**

(30) Priorität: **27.07.87 DE 3724838**

(43) Veröffentlichungstag der Anmeldung:
**01.02.89 Patentblatt 89/05**

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Artiga Gonzalez, Rene Andres, Dr.**
**Am Nettchesfeld 30**
**D-4000 Düsseldorf(DE)**
Erfinder: **Nicolaisen, Heinz-Christian**
**Ossietzkyring 4**
**D-3000 Hannover(DE)**
Erfinder: **Kammer, Lothar**
**Geibelstrasse 102**
**D-3000 Hannover 1(DE)**

## (54) Verwendung von lichtinduziert vernetzbaren Monomer-Zusammensetzungen als dunkelhärtende Klebstoffe.

(57) Die Verwendung von mittels Photoinitiatoren und Stabilisatoren vernetzbaren, wasserfreien Monomerzusammensetzungen, enthaltend flüssige, eine ethylenische Doppelbindung oder mehrere aufweisende polymerisierbare Monomere, Campherchinon, Arylsulfinat sowie Verdickungsmittel und/oder Haftverbesserer und/oder Beschleuniger als lichtinduziert dunkelhärtende Klebstoffe für die Verklebung nicht transparenter Flächen ergibt Klebeverbindungen mit ausgezeichneten Zugscherfestigkeiten.

EP 0 301 353 A2

Xerox Copy Centre

## Verwendung von lichtinduziert vernetzbaren Monomer-Zusammensetzungen als dunkelhärtende Klebstoffe.

Die Erfindung betrifft die Verwendung von mittels Photoinitiatoren und Stabilisatoren vernetzbaren wasserfreien Monomer-Zusammensetzungen. Die Erfindung betrifft weiterhin ein Verfahren zum Verkeleben nicht transparenter, insbesondere metallischer Flächen.

Klebstoffe auf Basis radikalisch polymerisierbarer, ein Monomer oder mehrere mit ethylenisch ungesättigten Doppelbindungen enthaltender Systeme gewinnen zunehmend an Bedeutung. Diese Systeme enthalten häufig kurzkettige, ungesättigte Carbonsäureester wie Methylmethacrylat, Cyclohexylmethacrylat oder Tetrahydrofurfurylmethacrylat, freie Methacrylsäure oder Mischungen derartiger Monomere, wobei Methylmethacrylat die wichtigste Komponente ist. Derartige Reaktivklebstoffe sind sowohl als sogenannte "Zweikomponenten-Kleber" als auch als anaerobe Systeme im Handel erhältlich.

Ein Nachteil der zuletztgenannten Systeme ist, daß ihre Aushärtung durch radikalische Polymerisation nur in Abwesenheit von Sauerstoff erfolgt. Darüber hinaus weisen als Zweikomponenten-Kleber formulierte Acrylat-Klebstoffe begrenzte Topfzeiten auf.

Weiterhin ist bekannt, daß Vinylmonomere beim Einsatz geeigneter Photoinitiatoren mit Hilfe elektromagnetischer Strahlung photopolymerisiert werden können, vgl. J. Hutchingson et al., "Advances in Polymer Sciences" 14, 49 (1974), G. Oster und N. L. Yang, "Chemical Reviews" 68, 125 (1968). Es hat sich jedoch gezeigt, daß relativ energiereiche Strahlung benötigt wird, damit in einer praxisgerechten Zeit ("Setting Time") gute Qualitäten der Verklebung, d.h. hohe Zugscherfestigkeiten, erreicht werden. Ließ sich eine energiereiche elektromagnetische Strahlung aus technischen Gründen nicht einsetzen oder standen nur schwache Strahlungsquellen zur Verfügung, mußte eine lange Belichtungszeit vorgesehen werden. Schließlich ließen sich nicht transparente Substrate mit photoinitiierten Vinylmonomersystemen unter dem Einfluß elektromagnetischer Strahlung unter Bedingungen der Praxis nicht fachgerecht verkleben.

Aus der DE-OS 17 20 906 ist ein Verfahren zur Polymerisation von festen, wasserlöslichen Vinylmonomeren, nämlich Salzen und wässerlöslichen Amiden, bekannt, bei dem ein Katalysatorgemisch aus einem Sensibilisator und eine organischen Sulfin-, Phosphin- oder Arsinverbindung der Monomermischung zugesetzt und das System einer Photopolymerisation unterworfen wird. Nach der genannten Druckschrift lassen sich so Schichten herstellen, die als Druckplatten oder ähnliches gut geeignet sind, indem die belichteten Stellen polymerisert sind und damit dem Einfluß von Lösungsmitteln oder ähnlichem widerstehen, während unbelichtete Stellen durch geeignete Lösungs mittel ausgewaschen werden und damit dem Lichtmuster entsprechende Platten hergestellt werden können. Als Basis für reaktive Klebstoffe sind die in der genannten Druckschrift aufgeführten, wasserlöslichen Vinylmonomere nicht geeignet.

Die Erfindung ist auf ein neues Klebeverfahren auf Basis von durch Photoinitiatoren vernetzbaren polymerisierbaren Verbindungen gerichtet, die als Reaktivklebstoffsysteme geeignet sind. Bei den erfindungsgemäß zu verwendenden Klebstoffsystemen erfolgt der Mechanismus der polymerisierenden Vernetzung in der Weise, daß die Polymerisation durch elektromagnetische Strahlung induziert wird, der Polymerisationsprozeß selbst jedoch nach der Initiation auch ohne weitere Bestrahlung fortschreitet. Damit wird eine Aushärtung des Klebstoffes im Dunkeln, z.B. zwischen Metalloberflächen oder in Klebefugen, möglich. Die Polymerisation ist durch Strahlung aus dem sichtbaren Bereich des Spektrums induzierbar; die Klebstoffe werden als Ein-Komponenten-Systeme formuliert.

Demgemäß ist der Gegenstand der Erfindung auf eine Verwendung von Zusammensetzungen der eingangs genannten Art gerichtet, die

(a) 40 bis 90 Gew.-Teile flüssige, eine ethylenische Doppelbindung oder mehrere aufweisende polymerisierende Monomere,

(b) 0,01 bis 2 Gew.-Teile Campherchinon als Photosensibilisator,

(c) 0,01 bis 5 Gew.-Teile Arylsulfinat als Photoinitiator,

(d) 5 bis 60 Gew.-Teile übliche Verdickungsmittel und/oder 0,1 bis 10 Gew.-Teile übliche Haftverbesserer und/oder wirksame Mengen an üblichen Beschleunigern enthalten, als lichtinduziert dunkelhärtende Klebstoffe für die Klebung nicht transparenter, insbesondere metallischer Flächen.

Als erfindungsgemäß einzusetzende Arylsulfinate eignen sich Alkali- oder gegebenenfalls substituierte Ammoniumsalze, insbesondere Natrium-, Kalium-, Lithium-, Ammonium- und mono-oder di-($C_1$-$C_4$-Alkyl)-substituierte Ammoniumsalze von Arylsulfinsäuren, insbesondere Toluol-, Xylol, Chlorbenzol- oder Chlortoluolsulfinsäure.

Bevorzugt ist die Verwendung von Zusammensetzungen mit

(a) einen polymerisierbaren Monomeren oder mehreren in Mengen von 30 bis 60 Gew.-Teilen,

(b) 0,1 bis 0,5 Gew.-Teilen Campherchinon,

(c) 0,3 bis 2,0 Gew.-Teilen Alkali-p-toluolsulfinat sowie gegebenfalls

(d) üblichen Verdickungsmitteln in einer Menge im Bereich von 60 bis 10 Gew.-Teilen, üblichen Haftverbesserern in einer Menge im Bereich von 0,4 bis 8 Gew.-Teilen und üblichen Beschleunigern einer Menge im Bereich von 0,1 bis 3 Gew.-Teilen.

Die erfindungsgemäß zu verwendenden Zusammensetzungen enthalten vorzugsweise ein polymerisierbares Monomeres aus der Gruppe der Verbindungen der allgemeinen Formeln (I) und (II).

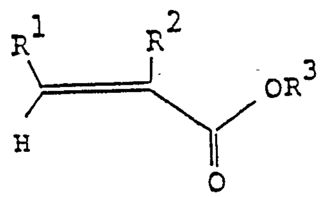 (I) 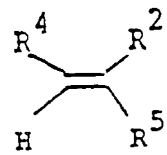 (II)

in denen

$R^1$ und $R^2$ unabhängig voneinander für Wasserstoff oder eine Methylgruppe,

$R^3$ für geradkettige oder verzweigte Alkylreste mit 1 bis 8 C-Atomen oder für durch eine oder mehrere Hydroxy- oder Aminogruppen substituierte, geradkettige oder verzweigte Alkylreste mit 1 bis 8 C-Atomen in der Alkylengruppe oder mit Phosphatgruppen verbundene Alkoxygruppen mit 1 bis 6 C-Atomen in der Alkylengruppe und

$R^4$ und $R^5$ unabhängig voneinander für Wasserstoff, Alkanoylgruppen mit 0 bis 4 C-Atomen im Alkylrest der zugehörigen Carbonsäure oder Arylreste, die gegebenenfalls durch Doppelbindungen aufweisende Gruppen substituiert sind, mit der Maßgabe stehen, daß nicht beide Reste $R^4$ und $R^5$ gleichzeitig für Wasserstoff stehen.

Es kommen also als polymerisierbare Monomere in bevorzugter Weise Verbindungen aus der Gruppe der Verbindungen der allgemeinen Formeln (I) und (II) in Frage, in denen beispielsweise $R^3$ für Methyl, Ethyl, n-Propyl, n-Butyl, n-Pentyl, n-Hexyl, n-Heptyl oder n-Octyl oder auch jeden beliebigen verzweigten Alkylrest, der mit den genannten Alkylresten isomer ist, steht. Dies bedeutet nichts anderes, als daß als Verbindungen (I) solche Ester ungesättigter Carbonsäuren bevorzugt in Frage kommen, die mit geradkettigen oder verzweigten einwertigen Alkoholen gebildet wurden. Aus dieser Gruppe sind beispielsweise besonders bevorzugt die Acrylsäureester und Methacrylsäureester der einwertigen aliphatischen Alkohole sowie auch entsprechende Ester der Crotonsäure.

In einer weiteren bevorzugten Ausführungsform kommen als polymerisierbare Monomere Verbindungen aus der Gruppe der Verbindungen der allgemeinen Formel (I) in Frage, in der der Rest $R^3$ eine durch eine oder mehrere Hydroxy- oder Aminogruppen substituierte, geradkettige oder verzweigte Methyl-, Ethyl-, Propyl-, Butyl-, Pentyl-, Hexyl-, Heptyl- oder Octylgruppe sein kann. Dies bedeutet, daß als Verbindungen (I) die Ester ungesättigter Carbonsäuren mit zwei- oder mehrwertigen Hydroxy- oder Hydroxyaminoverbindungen Verwendung finden. Unter solche Verbindungen fallen in besonders bevorzugter Weise die Acrylsäure-, Methacrylsäure- oder Crotonsäureester mehrwertiger aliphatischer Alkohole und/oder Aminoalkohole.

In einer weiteren bevorzugten Ausführungsform enthalten die erfindungsgemäßen Zusammensetzungen solche Verbindungen der allgemeinen Formel (I), in der $R^3$ für mit Phosphatgruppen verbundene, geradkettige oder verzweigte Methoxy-, Ethoxy-, Propoxy-, Butoxy-, Pentoxy- oder Hexoxygruppen, also Alkoxygruppen mit 1 bis 6 C-Atomen im geradkettigen oder verzweigten Alkylenrest, steht. Derartige polymerisierbare Monomere der allgemeinen Formel (I) sind also Doppelester einer der oben genannten ungesättigten Carbonsäuren und der Phosphorsäure.

In einer weiteren bevorzugten Ausführungsform enthalten die erfindungsgemäßen Zusammensetzungen polymerisierbare Monomere aus der Gruppe der Verbindungen der allgemeinen Formel (II), in der $R^2$ - wie auch oben in der allgemeinen Formel (I) - für Wasserstoff oder eine Methylgruppe steht und $R^4$ und $R^5$ unabhängig voneinander für Wasserstoff, Alkanoylgruppen mit 1 bis 4 C-Atomen im Alkylrest der zugehörigen Carbonsäuren oder Arylreste stehen, die gegebenenfalls durch Doppelbindungen aufweisende Gruppen substituiert sind. Die Verbindungen der allgemeinen Formel (II) können also Derivate von Dicarbonsäuren, wie beispielsweise der Maleinsäure, sein; in diesem Fall steht in der oben angegebenen allgemeinen Formel (II) $R^2$ für Wasserstoff und $R^4$ und $R^5$ jeweils für eine Carboxylgruppe, also eine Alkanoylgruppe im Sinne der oben genannten Definition mit 0 C-Atomen im Alkylrest der zugehörigen Carbonsäure. Genauso ist es natürlich möglich, daß die Reste $R^4$ und $R^5$ für Alkanoylgruppen höherer Carbonsäuren stehen, beispielsweise solcher Carbonsäuren, die 1 bis 4 C-Atome im Alkylrest der Carbonsäure aufweisen. Von

den oben genannten Derivaten der Maleinsäure, die erfindungsgemäß als polymerisierbares Monomeres in den Zusammensetzungen eingesetzt werden kann, werden bevorzugt deren Ester mit ein- oder mehrwertigen Hydroxyverbindungen verwendet. Als solche Hydroxygruppen aufweisende Verbindungen sind - wie auch im Falle der oben genannten Ester der Acryl- oder Methacrylsäure - einwertige oder auch höherwertige Alkohole anzusehen. Neben den Derivaten ungesättigter Dicarbonsäuren kann das polymerisierbare Monomere in den erfindungsgemäßen Zusammensetzungen jedoch auch eine Verbindung der allgemeinen Formel (II) sein, in der $R^4$ für bestimmte Arylreste steht, die gegebenenfalls auch noch durch Doppelbindungen aufweisende Gruppen substituiert sein können. Im einfachsten, keine weiteren Substituenten am Arylrest aufweisenden Fall handelt es sich dabei um Verbindungen wie Styrol oder auch Divinylbenzol; diese Verbindungen sind als polymerisierbare Monomere in den erfindungsgemäßen Zusammensetzungen ebenfalls besonders bevorzugt. Es ist jedoch auch möglich, höhere und gegebenenfalls auch substituierte Arylrest in Verbindungen der allgemeinen Formel (II) an den durch die Reste $R^4$ und $R^5$ bezeichneten Stellen vorzusehen.

Gemäß einer besonders bevorzugten Ausführungsform erhalten die erfindungsgemäß zu verwendenden Zusammensetzungen Methylmethacrylat als polymerisierbares Monomeres; es ergibt zufriedenstellende bis gute Scherfestigkeiten.

Das in den erfindungsgemäß zu verwendenden Zusammensetzungen als Photosensibilisator eingesetzte Campherchinon ist in polymerisierbaren Systemen aus dem Stand der Technik bekannt. Im Rahmen der vorliegenden Erfindung wird erstmals eine Campherchinon enthaltende Zusammensetzung zur Verwendung bei der Verklebung nicht transparenter Substrate vorgestellt, wobei gleichzeitig ein durch Energieübertragung durch den Sensibilisator anregbarer Photoinitiator, nämlich Alkali-p-toluolsulfinat, insbesondere die Lithium- und Natriumverbindungen desselben, dahin gestzt wird. Derartige Systeme sind auf dem Klebstoffgebiet, insbesondere auf dem Gebiet der Ein-Komponenten-Klebstoffe, weder bekannt noch naheliegend. Die erfindungsgemäß zu verwendenden geringen Sensibilisator-und Initiatormengen reichen in vollem Umfang aus, um die von außen dem System zugeführte elektromagnetische Strahlung zu absorbieren bzw. zu übertragen und in der Folge an die einzelnen Monomeren unter Initiierung der Polymerisation weiterzugeben.

Außer den nicht wasserlöslichen, polymerisierbaren Monomeren, dem durch elektomagnetische Strahlung anregbaren Sensibilisator und dem durch den angeregten Sensibilisator oxidierbaren Photoinitiator können die erfindungsgemäßen Zusammensetzungen gegebenenfalls übliche Verdickungsmittel, Haftungsverbesserer und Beschleuniger enthalten. Die Mengen der genannten Verbindung sind dabei in weiten Grenzen variabel; übliche Ver dickungsmittel sind - sofern sie zugesetzt werden - in Mengen von 60 bis 40, insbesondere von 60 bis 10 Gew.-% in den erfindungsgemäßen Zusammensetzungen enthalten. Übliche Haftungsverbesserer werden in Mengen von 0,1 bis 10 Gew.-%, bevorzugt in Mengen von 0,4 bis 6 Gew.-%, übliche Beschleuniger in Mengen von 0,1 bis 5 Gew.-%, bevorzugt in Mengen von 0,1 bis 2,5 Gew.-%, zugesetzt.

Als übliche Verdickungsmittel können dabei alle - normalerweise polymeren - mehr oder weniger hochviskosen Zusätze gewählt werden, die üblicherweise derartigen zur Eignung als Klebstoffsysteme gedachten Zusammensetzungen zugesetzt werden. Dafür ist bevorzugt Polymethylmethacrylat zu nennen. Es ist jedoch auch möglich, als Verdickungsmittel hochdisperse Kieselsäure zuzusetzen. Diese kann das oben beispielhaft genannte Polymethylmethacrylat in Mengen von 1 bis 10 Gew.-% ersetzen.

Als Haftverbesserer werden üblicherweise zusätzlich Methacrylsäure oder Acrylsäure zugesetzt. Auch andere Haftverbesserer können in den Zusammensetzungen enthalten sein, wie etwa copolymerisierbare polare Gruppen enthaltende (Meth)acrylmonomere, z.B. Hydroxyethyl(meth)arylsäureester.

In einer weiteren bevorzugten Ausführungsform der vorliegenden Erfindung kann den Zusammensetzungen ein üblicher Beschleuniger zugesetzt werden, wenn besonders schnelle Aushärtungszeiten erwünscht sind. Dabei ist es möglich, einen der Beschleuniger aus der genannten Gruppe allein zur Verkürzung der Aushärtzeiten zuzusetzen, ebenso wie man auch mehrere in Kombination miteinander einsetzen kann.

Besonders bevorzugt sind Beschleuniger aus der Gruppe 4-Dimethylaminobenzoesäure, 4-Dimethylaminobenzoesäureethylester, 4-Dimethylaminobenzaldehyd, 2-Mercaptobenzothiazol, 2-Mercapto-benzoxazol, 2-Mercaptobenzimidazol, p-Toluylaldehyd, Terephthalaldehyd und Laurinaldehyd.

Der besondere, wesentliche Vorteil der erfindungsgemäßen und oben näher beschriebenen Zusammensetzungen liegt darin, daß zur Auslösung des Polymerisationsvorgangs, also der Vernetzung, eine kurzzeitige Bestrahlung der aus den oben genannten Komponenten bestehenden Zusammensetzungen durch Licht des sichtbaren Wellenlängenbereiches genügt und danach - im Gegensatz zu allen anderen bisher bekannten Systemen dieser Art - der Polymerisationsvorgang nach Beendigung der Bestrahlung fortgeführt wird. Dies bedeutet, daß eine kurzzeitige Bestrahlung der Mischungen ausreicht, um die Vernetzung, also den Beginn des Klebvorganges, in Gang zu setzen, die Polymerisationsmischung jedoch auch in der

Dunkelheit weiterreagiert. Dies ermöglicht in vorteilhafter Weise, die erfindungsgemäßen Zusammensetzungen als Klebstoffsysteme zur Verklebung von nichttransparenten Substraten zu verwenden. Im Gegensatz zu allen anderen vergleichbar zusammengesetzten Klebstoffsystemen, die während des gesamten Aushärtvorgangs bestrahlt werden mußten und deswegen nur zur Verklebung transparenter Substrate geeignet waren, können die vorliegenden Zusammensetzungen auch in der Dunkelheit der Klebefuge weiterreagieren und ermöglichen damit auch die Verklebung der nichttransparenten Substrate.

Bisher war es nicht möglich, derartige Klebesysteme ohne permanente Bestrahlung zur Aushärtung zu bringen. Die vorliegend vorgeschlagene Zusammensetzung ermöglicht dies nun in einfacher und technisch bequem durchführbarer Form. Dabei werden mit Zusammensetzungen der erfindungsgemäßen Art Zugscherfestigkeiten erreicht, wie sie auch bisher bekannte, eine permanente Belichtung erfordernde Kleber erreichen konnten.

Weiterhin ist es aus Sicht des Anwenders als erheblicher Vorteil anzusehen, daß die erfindungsgemäßen Zusammensetzungen als Ein-Komponenten-System formuliert sind und damit eine wesentlich einfachere Handhabung bei der Verwendung ermöglichen.

Die Erfindung ist weiterhin auf ein Verfahren zum Verkleben nicht transparenter, insbesondere metallischer Flächen gerichtet, gemäß dem man die zu verbindenden Flächen mit den gemäß den obigen Merkmalen zu verwendenden Zusammensetzungen versieht, etwa 1 bis 3 Minuten dem Tageslicht bzw. der Strahlung einer entsprechenden künstlichen Lichtquelle aussetzt und die Flächen anschließend zusammenfügt sowie unter einem Druck von 1 bis 200 MPa 2 bis 24 Stunden zusammenpreßt.

Die Erfindung wird im folgenden anhand bevorzugter Ausführungsbeispiele näher erläutert.

Die verwendeten Abkürzungen bedeuten:

MMA = Methacrylsäuremethylester
PMMA = Polymethacrylsäuremethylester
CQ = Campherchinon
NAS = Natrium-p-toluolsulfinat
LIS = Lithium-p-toluolsulfinat
MAS = Methacrylsäure
Phos.GMA = Umsetzungsprodukt aus Phosphorsäure und Glycidylmethacrylat 1:1
JPA = Umsetzungsprodukt aus Phosphoroxychlorid und Hydroxyethylmethacrylat 1:1
ZSF = Zugscherfestigkeit von Fe/Fe-Verklebungen nach 24 Stunden in $N/mm^2$ (DIN 53 281/3)

Beispiel 1.

Aus 45 Gew.-Teilen MMA und 40 Gew.-Teilen PMMA wurde eine Grundmischung hergestellt.

50 Gew.-Teile einer derart zusammengesetzten Grundmischung wurden mit 0,2 Gew.-Teilen CQ versetzt und im Dunkeln gerührt; entsprechend wurden 50 Gew.-Teile der Grundmischung mit 1,5 Gew.-Teilen LIS versetzt. Die erhaltenen Lösungen, die keine ungelösten Feststoffe mehr erhielten, wurden im Dunkeln unter gleichzeitigem Zusatz von 7,0 Gew.-Teilen MAS vermischt und 20 min heftig gerührt.

Entfettete und durch Sandstrahlung oberflächenbehandelte Eisenbleche wurden beidseitig mit der Zusammensetzung eingestrichen und nach Einwirkung von Tageslicht (1 min) auf einer Fläche von 250 $mm^2$ aufeinandergelegt und mit einer Holzklammer fixiert.

Die Zugscherfestigkeit der so gebildeten Verklebungen wurde nach DIN 53 281/3 ermittelt. Di Ergebnisse sind in Tabelle 1 wiedergegeben

Beispiele 2 bis 10.

Analog zu der Abeitsweise des Beispiels 1 wurden Klebstoffmischungen unter Verwendung verschiedener Zusätze hergestellt. Die Mischungsverhältnisse sowie die erhaltenen Zugscherfestigkeiten der gebildeten Verklebungen sind in Tabelle 1 zusammengefaßt.

Tabelle 1

| Bsp. | CQ | NAS | LIS | MAS | JPA | Phos.GMA | ZSF |
|---|---|---|---|---|---|---|---|
| 1 | 0.2 | - | 1.5 | 7.0 | | | 10.6 |
| 2 | 0.6 | 2.0 | - | | 2.0 | | 28.5 |
| 4 | 0.2 | - | 2.0 | | | 4.0 | 13.0 |
| 5 | 0.6 | - | 1.5 | | 4.0 | | 13.1 |
| 6 | 0.2 | 1.0 | - | | 0.5 | | 16.2 |
| 7 | 1.0 | - | 1.5 | | | 4.0 | 15.4 |
| 8 | 0.2 | - | 0.2 | | 2.0 | | 13.4 |
| 9 | 0.2 | - | 0.8 | | 4.0 | | 19.3 |
| 10 | 1.0 | 1.0 | - | | 2.0 | | 16.6 |

Beispiele 11 bis 14.

Rezepturen mit Haftvermittlern.

Analog zu der Arbeitsweise des Beispiels 1 wurden Klebstoffsysteme hergestellt, die auf 100 Gew.-Teile Grundmischung aus 45 Gew.-Teilen MMA und 40 Gew.-Teilen PMMA 0,5 Gew.-Teile CQ, 0,6 Gew.-Teile LIS oder o,75 Gew.-Teile NAS enthielten; zusätzlich wurden MAS und JPA in unterschiedlichen Konzentrationen als Haftvermittler zugegeben. Die erhaltenen Ergebnisse sind in Tabelle 2 zusammengefaßt und die Mengenangaben sind wiederum Gew.-Teile.

Tabelle 2

| Beispiel | Initiator | MAS | JPA | ZSF |
|---|---|---|---|---|
| 11 | LIS | 1.0 | 0.4 | 18.6 |
| 12 | LIS | 3.0 | 0.4 | 14.9 |
| 13 | NAS | 1.0 | 0.4 | 17.6 |
| 14 | NAS | 3.0 | 0.4 | 13.3 |

Beispiele 15 bis 23.

Zu einer Grundmischung aus 45 Gew.-Teilen MMA, 40 Gew.-Teilen PMMA, 1 Gew.-Teil JPA, 0.5 Gew.-Teilen und 0,5 Gew.-Teilen CQ wurden nach der Arbeitsweise des Beispiels 1 unterschiedliche Mengen an Beschleunigern gegeben. Die einzelnen Rezepturen sowie die ermittelten Zugscherfestigkeiten sind in Tabelle 3 zusammengefaßt; die Mengenangaben sind Gew.-Teile.

Tabelle 3

| Beispiel | | ZSF ($N/mm^2$) |
|---|---|---|
| 15 | 4-Dimethylaminobenzoeäure 0,5 T | 29,0 |
| 16 | 4-Dimethylaminobenzoesäureethylester 0,5 T | 30,1 |
| 17 | 4-Dimethylaminobenzaldehyd 0,5 T | 27,7 |
| 18 | 2-Mercaptobenzothiazol 0,5 T | 18,9 |
| 19 | 2-Mercaptobenzoxazol 0,5 T | 31,4 |
| 20 | 2-Mercaptobenzimidazol 0,5 T | 25,0 |
| 21 | p-Tolylaldehyd 1,0 T | 27,3 |
| 22 | Terephthaldehyd 1,0 T | 32,7 |
| 23 | Laurinaldehyd 2,0 T | 25,2 |

## Ansprüche

1. Verwendung von mittels Photoinitiatoren und Sensibilisatoren vernetzbaren wasserfreien Monomer-Zusammensetzungen, enthaltend
(a) 40 bis 90 Gew.-Teile flüssige, eine ethylenische Doppelbindung oder mehrere aufweisende polymerisierbare Monomere
(b) 0,01 bis 2 Gew.-Teile Campherchinon als Photosensibilisator,
(c) 0,01 bis 5 Gew.-Teile Arylsulfinat als Photoinitiator,
(d) 5 bis 60 Gew.-Teile übliche Verdickungsmittel und/oder 0,1 bis 10 Gew.-Teile übliche Haftverbesserer und/oder wirksame Mengen an üblichen Beschleunigern,
als lichtinduziert dunkelhärtende Klebstoffe für die Verklebung nicht transparenter, insbesondere metallischer Flächen.

2. Verwendung nach Anspruch 1, dadurch gekennzeichnet, daß die Zusammensetzungen
(a) ein oder mehrere polymerisierbare Monomere in Mengen von 30 bis 60 Gew.-Teile
(b) 0,1 bis 0,5 Gew.-Teile Campherchinon
(c) 0,3 bis 2,0 Gew.-Teile Alkali-p-toluolsulfinat sowie gegebenfalls
(d) übliche Verdickungsmittel in einer Menge im Bereich von 60 bis10 Gew.-Teilen
übliche Haftverbesserer in einer Menge im Bereich von 0,4 bis 8 Gew.-Teilen und
übliche Beschleuniger in einer Menge im Bereich von 0,1 bis 3 Gew.-Teilen
enthalten.

3. Verwendung nach Anspruch 1 oder 2, dadurch gekennzeichnet, daß die Zusammensetzungen ein polymerisierbares Monomeres aus der Gruppe der Verbindungen der allgemeinen Formeln (I) und (II)

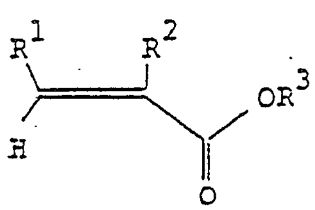 (I)

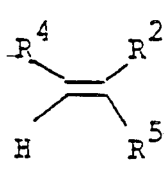 (II)

in denen
$R^1$ und $R^2$ unabhängig voneinander für Wasserstoff oder $CH_3$,
$R^3$ für geradkettige oder verzweigte Alkylreste mit 1 bis 8 C-Atomen oder für durch eine oder mehrere Hydroxy- oder Aminogruppen substituierte, geradkettige oder verzweigte Alkylreste mit 1 bis 8 C-Atomen in der Alkylengruppe oder mit Phosphatgruppen verbundene Alkoxygruppen mit 1 bis 6 C-Atomen in der Alkylengruppe und
$R^4$ und $R^5$ unabhängig voneinander für Wasserstoff, Alkanoylgruppen mit 1 bis 4 C-Atomen im Alkylrest der zugehörigen Carbonsäure oder Arylreste, die gegebenenfalls durch Doppelbindungen aufweisende Gruppen

substituiert sind, mit der Maßgabe stehen, daß nicht beide Reste $R^4$ und $R^5$ gleichzeitig für Wasserstoff stehen
enthalten.

4. Verwendung nach einem der Ansprüche 1 bis 3, dadurch gekennzeichnet, daß die Zusammensetzungen ein polymerisierbares Monomeres aus der Gruppe Acrylsäureester und Methacrylsäureester ein- und mehrwertiger aliphatischer Alkohole, Acrylsäureester und Methacrylsäureester mehrwertiger Hydroxyverbindungen, Crotonsäureester und Maleinsäureester ein- und mehrwertiger aliphatischer Alkohole, Vinylacetat, Divinylbenzol, Styrol, 2-Acryloylphosphat und 2-Methacryloylphosphat enthalten.

5. Verwendung nach einem der Ansprüche 1 bis 4, dadurch gekennzeichnet, daß die Zusammensetzungen als Verdickungsmittel Polymerisationsprodukte von eine ethylenischen Doppelbindung oder mehrere aufweisenden Monomeren enthalten.

6. Verwendung nach einem der Ansprüche 1 bis 5, dadurch gekennzeichnet, daß die Zusammensetzungen als Verdickungsmittel Polymethylmethacrylat enthalten.

7. Verwendung nach einem der Ansprüche 1 bis 6, dadurch gekennzeichnet, daß die Zusammensetzungen als Haftverbesserer zusätzlich freie Methacrylsäure, Acrylsäure sowie polare Gruppen enthaltende (Meth)acrylsäuremonomere enthalten.

8. Verwendung nach einem der Ansprüche 1 bis 7, dadurch gekennzeichnet, daß die Zusammensetzungen übliche Beschleuniger enthalten.

9. Verwendung nach einem der Ansprüche 1 bis 8, dadurch gekennzeichnet, daß die Zusammensetzungen als Beschleuniger Verbindungen aus der Gruppe 4-Dimethylaminobenzoesäure, 4-Dimethylaminobenzoesäureethylester, 4-Dimethylaminobenzaldehyd, 2-Mercaptobenzothiazol, 2-Mercaptobenzoxazol, 2-Mercaptobenzimidazol, p-Tolylaldehyd, Terephthalaldehyd und Laurinaldehyd enthalten.

10. Verfahren zum Verkleben nicht transparenter, insbesondere metallischer Flächen, dadurch gekennzeichnet, daß man die Flächen mit den gemäß den Ansprüchen 1 bis 9 zu verwendenden Zusammensetzungen versieht, etwa 1 bis 30 Minuten dem Tageslicht bzw. der Strahlung einer entsprechenden künstlichen Lichtquelle aussetzt und die Flächen anschließend zusammenfügt sowie unter einem Druck von 1 bis 200MPa 2 bis 24 Stunden zusammenpreßt.